# FASCICULE DE BREVET EUROPEEN

(11) **EP 1 645 459 B1**
(45) Date de publication et mention de la délivrance du brevet: **21.10.2009**
(21) Numéro de dépôt: 05291639.2
(22) Date de dépôt: 01.08.2005
(51) Int. Cl.: B60N 2/06

(54) **Siège individuel réglable en largeur, pour véhicule**
Individueller und in der Breite einstellbarer Fahrzeugsitz
Individual and width adjustable vehicle seat

(30) Priorité: 14.09.2004 FR 0452043
(43) Date de publication de la demande: 12.04.2006
(73) Titulaire: Heuliez, 79140 Cerizay (FR)
(72) Inventeur: Queveau, Gérard, 79140 Le Pin (FR); Leclerre, Frédéric, 91300 Massy (FR); Queveau, Paul, 79140 Montravers (FR)
(74) Mandataire: Novagraaf IP

(56) Documents cités:
- DE-A1- 10 212 548
- DE-C- 947 132
- DE-U1- 20 000 479
- FR-A- 658 883
- FR-A- 2 775 637
- GB-A- 333 354
- US-A- 2 742 952
- US-A- 5 553 813
- PATENT ABSTRACTS OF JAPAN vol. 2003, no. 08, 6 août 2003 (2003-08-06) & JP 2003 118462 A (NISSAN MOTOR CO LTD), 23 avril 2003 (2003-04-23)
- PATENT ABSTRACTS OF JAPAN vol. 2003, no. 12, 5 décembre 2003 (2003-12-05) & JP 2003 245158 A (TAKASHIMAYA NIPPATSU KOGYO CO LTD), 2 septembre 2003 (2003-09-02)
- PATENT ABSTRACTS OF JAPAN vol. 2002, no. 09, 4 septembre 2002 (2002-09-04) & JP 2002 153348 A (TENRYU IND CO LTD), 28 mai 2002 (2002-05-28)

## Description

L'invention concerne un siège individuel réglable en largeur, pour véhicule.

En particulier, le siège selon l'invention est destiné aux véhicules automobiles de type monospaces ou berlines.

On connaît déjà des sièges individuels susceptibles d'être réglés en largeur. Toutefois, dans les sièges connus, seuls l'assise ou le dossier sont réglables en largeur, et il n'est pas prévu de pouvoir régler en même temps l'assise et le dossier, de sorte à s'adapter de façon optimale à la morphologie du passager.

Le document JP 2003118462 décrit un siège individuel réglable en largeur. Le siège comprend un dossier et une assise supportées par un support. Le siège est composé de deux parties. Le mouvement de la partie mobile est réalisé par coulissement de celle-ci dans des glissières aménagées dans la partie fixe. Toutefois, le mouvement est commandé par une poignée solidaire de la partie mobile permettant à l'utilisateur de réaliser le mouvement de coulissement et ce document ne divulgue pas un mécanisme de commande disposé à l'intérieur de la structure porteuse et/ou desdites traverses de sorte à commander lesdites parties symétriques du dossier, respectivement de l'assise, de façon symétrique par rapport au plan de symétrie.

En outre, il est souhaitable que la largeur d'un même siège puisse être facilement modifiée en fonction du nombre de passagers et/ou du type d'objets devant être transportés dans le véhicule concerné.

A cet effet, l'invention propose un siège individuel réglable en largeur pour véhicule, ledit siège possédant un plan de symétrie sensiblement vertical, un dossier et une assise s'étendant sensiblement perpendiculairement au plan de symétrie, une structure porteuse, le dossier et l'assise étant respectivement supportés sur la structure porteuse, chacun grâce à au moins une traverse solidaire de la structure porteuse et possédant un axe perpendiculaire au plan de symétrie, le dossier et l'assise étant respectivement constitués de deux parties symétriques par rapport au plan vertical et disposées symétriquement de part et d'autre du plan vertical, chacune des parties symétriques du dossier et de l'assise étant constituée par une structure possédant un dispositif de guidage permettant de guider chacune des parties symétriques par rapport aux dites traverses suivant ledit axe perpendiculaire au plan de symétrie, au moins un mécanisme de commande étant disposé à l'intérieur de la structure porteuse et/ou desdites traverses, de sorte à commander lesdites parties symétriques du dossier respectivement de l'assise de façon symétrique par rapport au plan de symétrie.

Ainsi, la largeur d'un tel siège peut être aisément adaptée à la morphologie du passager, par exemple entre un enfant et un adulte. La largeur du siège peut également être adaptée au type de trajet à effectuer : il est en effet plus confortable d'effectuer un trajet long dans un siège de plus grande largeur. Pour des trajets plus courts, il est possible par exemple de réduire la largeur du siège, de sorte à ajouter un siège dans la même rangée. La largeur réduite du siège permet également de transporter des objets encombrants.

Selon une réalisation, l'ensemble des parties symétriques du dossier d'une part et l'ensemble des parties symétriques de l'assise d'autre part sont commandés de manière synchronisée l'un par rapport à l'autre.

En particulier, les parties symétriques du dossier et de l'assise peuvent être supportées par deux traverses sensiblement parallèles et espacées l'une de l'autre.

Selon une réalisation, le dispositif de guidage des parties symétriques du dossier, respectivement de l'assise, consiste en des éléments rectilignes solidaires desdites structures, lesdits éléments étant montés coulissants sur les traverses de manière télescopique.

Les éléments constituant le dispositif de guidage peuvent être des tubes coulissant à l'intérieur ou à l'extérieur des traverses.

En outre, chaque mécanisme de commande peut être constitué d'un ensemble pignon - crémaillère.

Chaque ensemble pignon - crémaillère peut comprendre au moins un pignon monté à rotation par rapport à la structure porteuse ou à la traverse, et au moins une crémaillère solidaire des parties symétriques du dossier et de l'assise.

En particulier, chacun des ensembles pignon - crémaillère est constitué de deux pignons disposés symétriquement par rapport au plan de symétrie, et d'une première et d'une deuxième crémaillère engrenant chacune les deux pignons, la première, respectivement la deuxième crémaillère étant solidaire respectivement des parties symétriques du dossier et de l'assise.

En particulier, les crémaillères d'un ensemble pignon - crémaillère sont formées sur des cadres rectangulaires évidés pour recevoir les deux pignons à l'intérieur des évidements, les cadres étant montés superposés et glissant l'un sur l'autre.

Selon une réalisation, la totalité des ensembles pignons - crémaillères du siège est entraînée par un moyen moteur unique ou par une commande manuelle unique.

Cette réalisation permet d'éviter le coincement des différentes parties du dossier et de l'assise, l'ensemble des pignons pouvant être actionné de façon synchronisée.

En particulier, un seul parmi les pignons d'un ensemble pignon - crémaillère est entraîné par un moyen moteur unique ou par une commande manuelle unique.

Selon une réalisation, la structure porteuse a une forme générale en L qui s'étend selon ledit plan de symétrie, ladite structure étant constituée d'au moins une plaque disposée sensiblement perpendiculairement au plan de symétrie.

En particulier, une partie de chaque traverse ou chaque traverse toute entière peut être formée avec la structure porteuse.

Par ailleurs, les structures du dossier, respectivement de l'assise, peuvent être recouvertes d'un matériau mou tel que de la mousse, ledit matériau étant recouvert d'un tissu élastique de sorte que le dossier, respectivement l'assise, présente une continuité de matériaux et de surface extérieure.

On décrira maintenant à titre d'exemples non limitatifs un mode de réalisation particulier de l'invention, en référence aux dessins schématiques annexés dans lesquels :
- les figures 1a, 1b, 1c sont des vues schématiques en perspective avant du siège selon l'invention, montrant le passage du siège d'une configuration étroite A à une configuration large C, via une configuration intermédiaire B ;
- la figure 2 est une vue schématique en perspective avant du siège selon l'invention, montrant la structure interne dudit siège ;
- la figure 3 est une vue en coupe selon le plan transversal de symétrie du siège selon l'invention ; la figure 3A montre en vue agrandie le détail A du guidage des parties de siège sur les traverses de la figure 3 ;
- la figure 4 est une vue schématique en perspective de la structure porteuse du siège selon l'invention, sur laquelle sont associés certains éléments du siège ;
- les figures 5a et 5b sont des vues schématiques en coupe de la mousse et du tissu recouvrant le siège, respectivement lorsque la largeur du siège est augmentée et diminuée ;
- la figure 6 est une vue en coupe de la partie haute d'un siège selon un autre mode de réalisation, suivant l'axe VI-VI de la figure 7 ;
- la figure 7 est une vue en coupe suivant l'axe VII-VII de la figure 6 ;
- la figure 8 est une vue schématique en perspective de la structure porteuse d'un siège comprenant les éléments représentés aux figures 6 et 7.

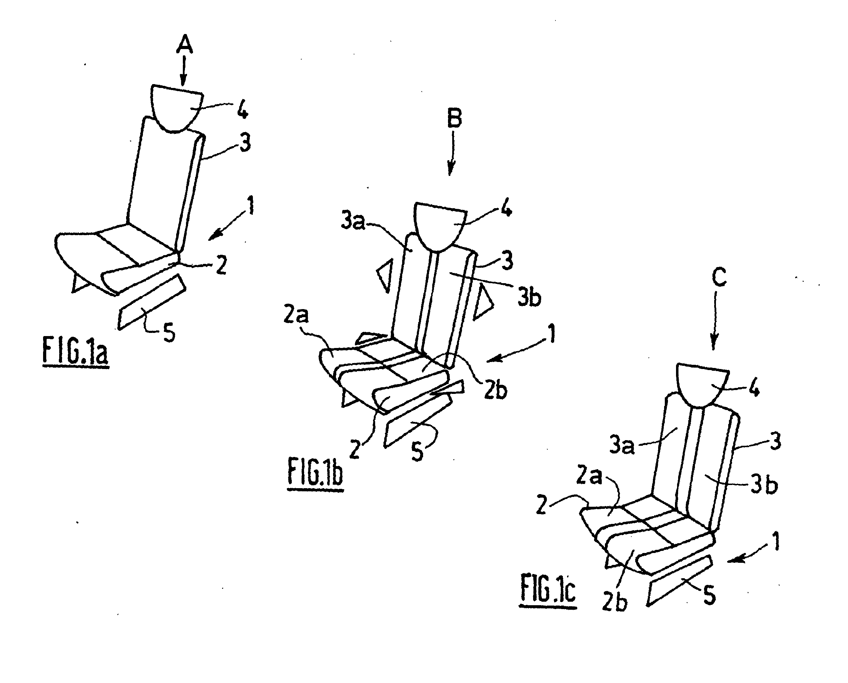

On voit à la figure 1 un siège individuel 1 pour véhicule comprenant une assise 2, un dossier 3, un appui-tête 4 et des pieds 5. L'assise 2 et le dossier 3 s'étendent sensiblement perpendiculairement au plan de symétrie vertical P du siège 1, qui est défini par les deux axes X et Z. L'axe X définit la direction avant-arrière, et l'axe Z définit la direction haut-bas, lorsque le siège est monté dans le véhicule.

L'assise 2 et le dossier 3 sont respectivement constitués de deux parties 2a, 2b, 3a, 3b, symétriques par rapport au plan P.

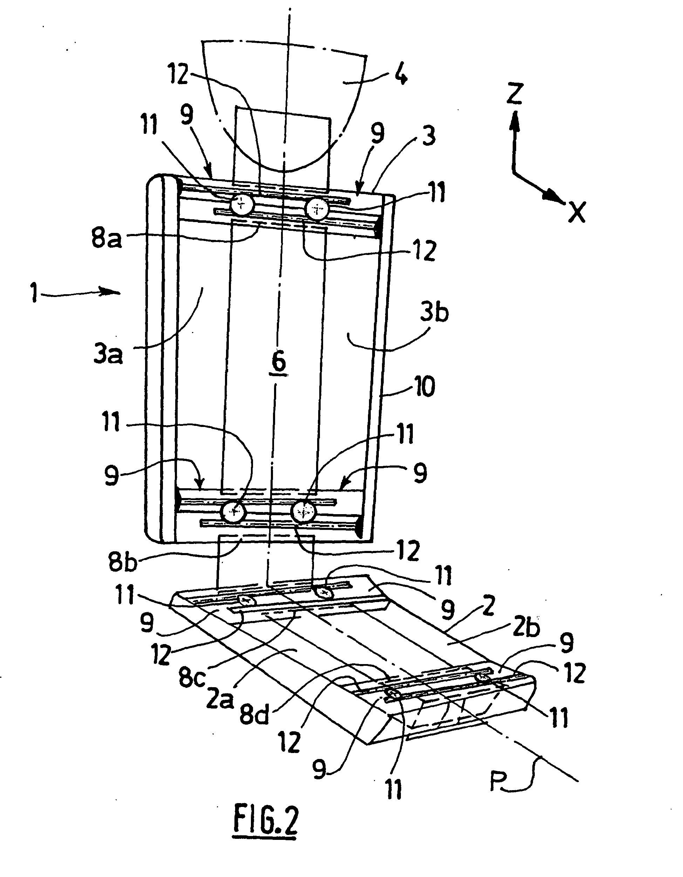

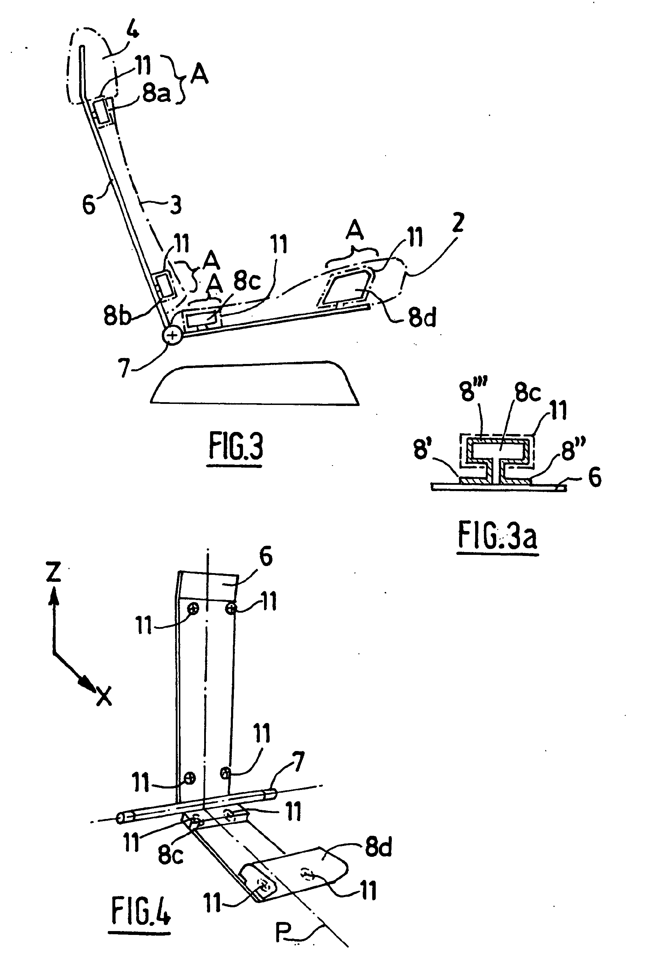

L'assise 2 et le dossier 3 sont supportés par une structure porteuse 6 s'étendant dans le plan P, représentée sur les figures 2 à 8, de forme générale en L. La structure porteuse 6 comprend un axe d'articulation 7, représenté sur les figures 3, 4 et 8, qui permet de régler l'inclinaison du dossier 3 par rapport à l'assise 2.

La structure porteuse 6 peut être réalisée à partir de plaques, par exemple métalliques, et possède des nervures de renfort. Les plaques et les nervures sont par exemple obtenues par un procédé de mise en forme tel que l'emboutissage.

Le dossier 3 et l'assise 2 sont supportés par des traverses 8a, 8b, 8c, 8d solidaires de la structure porteuse 6, qui s'étendent perpendiculairement au plan P. Deux traverses 8a, 8b (représentées en traits interrompus) sont prévues sur le dossier 3, respectivement en haut et en bas, et deux traverses 8c, 8d (représentées en traits interrompus) sont prévues sur l'assise 2, respectivement le long de la partie arrière et de la partie avant de l'assise 2.

Selon le mode de réalisation représenté sur la figure 2, les parties symétriques 2a, 2b, 3a, 3b respectivement de l'assise 2 et du dossier 3 sont guidées, lors de leur élargissement ou de leur rétrécissement, au moyen de tubes 9 montés respectivement sur les montants latéraux 10 du dossier 3 et de l'assise 2, de sorte à pouvoir coulisser à l'extérieur des traverses 8a, 8b, 8c, 8d. Comme on peut l'observer sur les figures 3 et 3A, les traverses sont de préférence des profilés de type oméga, c'est-à-dire des profilés ayant la forme de la lettre grecque oméga en coupe transversale. Les pieds 8'et 8" sont fixés à la structure porteuse 6, par exemple par soudage ; les tubes sont fendus pour le passage du pied du oméga et sont guidés en translation sur la partie supérieure 8"' du oméga. A la place d'un profil rectangulaire, la traverse et les tubes peuvent avoir des profils arrondis ce qui facilite leur fabrication. La disposition utilisant des tubes oméga qui vient d'être décrite peut être utilisée pour l'ensemble des guidages des parties de siège sur les traverses.

Le mécanisme de commande du réglage en largeur du siège comprend quatre ensembles pignon - crémaillère, situés respectivement sur les traverses haute, basse, avant et arrière du siège. Chaque ensemble pignon - crémaillère comprend deux pignons 11 montés à rotation sur la structure porteuse 6, et disposés symétriquement par rapport au plan P, ainsi que deux crémaillères 12 engrenant chacune les deux pignons 11.

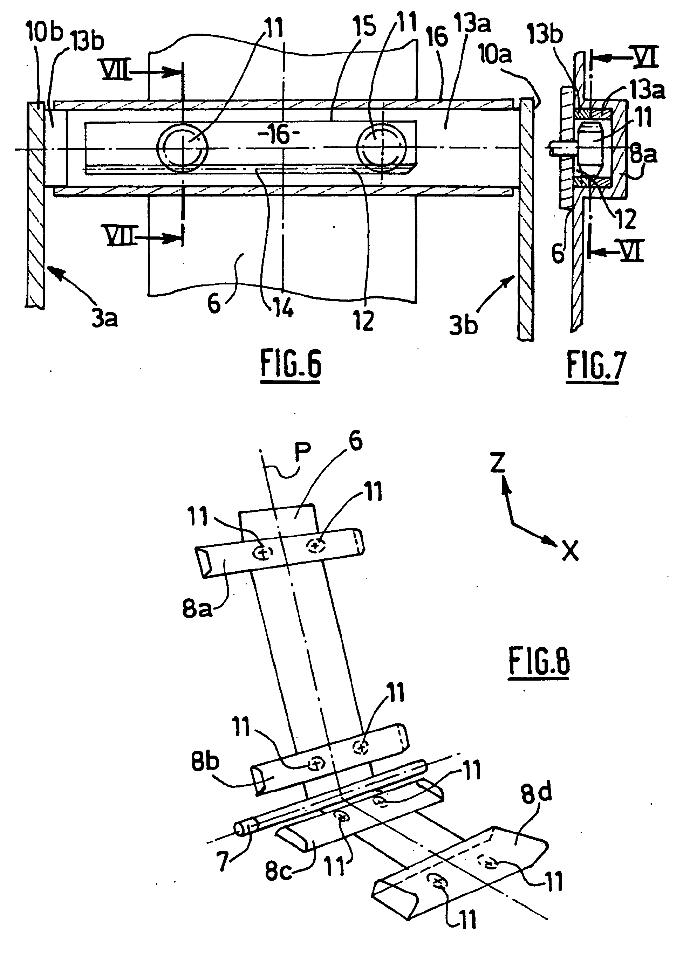

Selon le mode de réalisation représenté sur les figures 6 et 7, les parties symétriques 2a, 3b, 3a, 3b respectivement de l'assise 2 et du dossier 3 sont guidées au moyen de cadres rectangulaires 13a, 13b montés sur les montants latéraux 10 du siège 1. Ces cadres rectangulaires 13a, 13b sont évidés de sorte à pouvoir loger chaque couple de pignons 11. En particulier, le montant 10a latéral droit du dossier 3 est fixé à un premier cadre rectangulaire 13a, dont le côté horizontal inférieur 14 porte les dents de la crémaillère 12 (représentées en traits mixtes). Le côté horizontal supérieur 15 du même cadre 13a vient glisser librement sur le sommet des dents des pignons 11, ce qui participe au guidage et à la stabilité globale.

Un deuxième cadre 13b identique au premier est fixé sur le montant 10b latéral gauche du dossier 3, et vient se superposer et glisser sur le premier cadre 13a. Ce deuxième cadre 13b porte les dents de la crémaillère sur son côté horizontal supérieur. Le déplacement de ces deux cadres 13a, 13b est guidé par une traverse tubulaire 16 fixée à la structure porteuse 6. Cette réalisation implique ainsi que la traverse guide intérieurement les éléments de guidage, et non extérieurement comme dans la réalisation décrite en relation avec les autres figures. La figure 8 montre la structure porteuse 6 équipée des moyens de commande et de guidage illustrés aux figures 6 et 7. Celle-ci est réalisée à partir d'une plaque, par exemple métallique, chaque traverse 8a, 8b, 8c, 8d ou une partie de chaque traverse 8a, 8b, 8c, 8d étant formée avec la structure porteuse 6 de façon à obtenir une structure assez rigide. Les traverses 8a, 8b, 8c, 8d ont ici la forme de tubes dont la partie arrière est ouverte afin de pouvoir y engager les moyens de commande à pignon et crémaillère lors du montage. Une fois les moyens de commande engagés, le tube est fermé par un couvercle, tel qu'illustré sur la figure 7. On peut noter, sur la figure 7, que les cadres 13a,13b sont directement guidés par les traverses, ce qui permet de simplifier le montage et la construction elle-même. Le mode de réalisation illustré sur les figures 6, 7 et 8 peut avantageusement être appliqué à l'ensemble des traverses et des dispositifs de guidage d'un même siège. Au besoin, les différents modes de réalisation peuvent également être combinés sur un même siège.

Selon la réalisation représentée sur les figures 6 et 7 et 8, la structure des traverses, des dispositifs de guidage et de commande, ainsi que de la structure porteuse permettent d'obtenir un siège de faible épaisseur.

Par ailleurs, les moyens de commande des pignons 11 peuvent être, de façon non limitative, des câbles de traction et/ou de poussée, des câbles rotatifs, des tiges rotatives ou coulissantes.

En outre, une nappe extensible, telle qu'une nappe métallique, peut être avantageusement disposée entre les montants latéraux gauches et droits du dossier 3 et de l'assise 2.

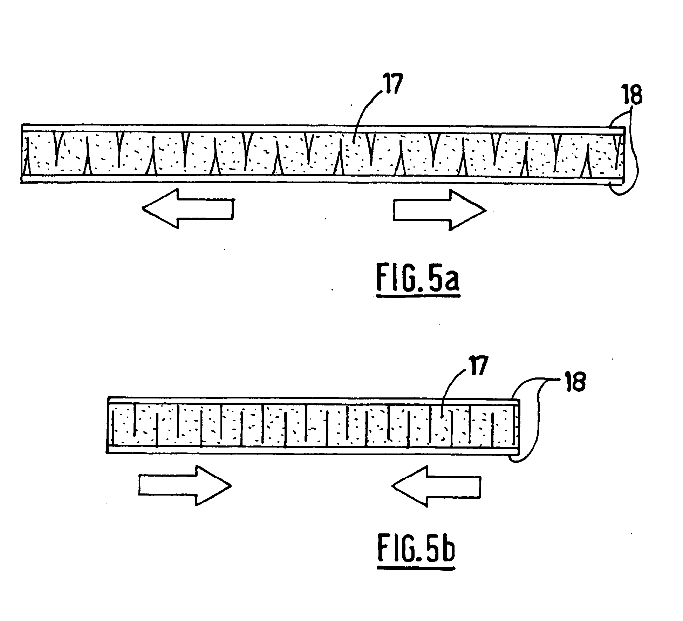

Cette nappe extensible peut être recouverte d'une mousse extensible 17, elle-même revêtue d'un tissu extensible 18, tels que représentés sur les figures 5a et 5b, de sorte à autoriser le passage du siège 1 de la configuration A à la configuration C, via la configuration B (voir figure 1), et inversement.

## Revendications

1. Siège individuel (1) réglable en largeur pour véhicule, ledit siège possédant un plan de symétrie (P) sensiblement vertical, un dossier (3) et une assise (2) s'étendant sensiblement perpendiculairement au plan de symétrie (P) et une structure porteuse (6), le dossier (3) et l'assise (2) étant respectivement supportés sur la structure porteuse (6), chacun grâce à au moins une traverse (8a, 8b, 8c, 8d) solidaire de la structure porteuse (6) et possédant un axe perpendiculaire au plan de symétrie (P), le dossier (3) et l'assise (2) étant respectivement constitués de deux parties (2a, 2b, 3a, 3b) symétriques par rapport au plan vertical (P) et disposées symétriquement de part et d'autre du plan vertical (P), chacune des parties symétriques (2a, 2b, 3a, 3b) du dossier (3) et de l'assise (2) étant constituée par une structure possédant un dispositif de guidage permettant de guider chacune des parties symétriques par rapport aux dites traverses (8a, 8b, 8c, 8d) suivant ledit axe perpendiculaire au plan de symétrie (P), ledit siège étant **caractérisé en ce qu'**il possède au moins un mécanisme de commande disposé à l'intérieur de la structure porteuse (6) et/ou desdites traverses (8a, 8b, 8c, 8d), de sorte à commander lesdites parties (2a, 2b, 3a, 3b) symétriques du dossier (3) respectivement de l'assise (2) de façon symétrique par rapport au plan de symétrie (P).

2. Siège selon la revendication 1, **caractérisé en ce que** l'ensemble des parties symétriques (3a, 3b) du dossier (3) d'une part, et l'ensemble des parties symétriques (2a, 2b) de l'assise (2) d'autre part, sont commandés de manière synchronisée l'un par rapport à l'autre.

3. Siège selon l'une quelconque des revendications 1 ou 2, **caractérisé en ce que** les parties symétriques (2a, 2b, 3a, 3b) du dossier (3) et de l'assise (2) sont supportées chacune par deux traverses (8a, 8b, 8c, 8d) sensiblement parallèles et espacées l'une de l'autre.

4. Siège selon l'une quelconque des revendications 1 à 3, **caractérisé en ce que** le dispositif de guidage des parties symétriques (2a, 2b, 3a, 3b) du dossier (3), respectivement de l'assise (2), consiste en des éléments rectilignes solidaires desdites structures, lesdits éléments étant montés coulissants sur les traverses de manière télescopique.

5. Siège selon la revendication 4, **caractérisé en ce que** les éléments constituant le dispositif de guidage sont des tubes (9) coulissant à l'intérieur ou à l'extérieur des traverses (8a, 8b, 8c, 8d).

6. Siège selon l'une quelconque des revendications précédentes, **caractérisé en ce que** chaque mécanisme de commande est constitué d'un ensemble pignon - crémaillère.

7. Siège selon la revendication 6, **caractérisé en ce que** chaque ensemble pignon - crémaillère comprend au moins un pignon (11) monté à rotation par rapport à la structure porteuse (6) ou à la traverse, et au moins une crémaillère (12) solidaire des parties symétriques du dossier et de l'assise.

8. Siège selon la revendication 7, **caractérisé en ce que** chacun des ensembles pignon - crémaillère est constitué de deux pignons (11) disposés symétriquement par rapport au plan de symétrie (P), et d'une première et d'une deuxième crémaillère (12) engrenant chacune les deux pignons (11), la première, respectivement la deuxième crémaillère étant solidaire respectivement des parties symétriques (2a, 2b, 3a, 3b) du dossier (3) et de l'assise (2).

9. Siège selon la revendication 8, **caractérisé en ce que** les crémaillères (12) d'un ensemble pignon-crémaillère sont formées sur des cadres rectangulaires (13a, 13b) évidés pour recevoir les deux pignons (11) à l'intérieur des évidements, les cadres (13a, 13b) étant montés superposés et glissant l'un sur l'autre.

10. Siège selon l'une quelconque des revendications 6 à 9, **caractérisé en ce que** la totalité des ensembles pignons-crémaillères est entraîné par un moyen moteur unique ou par une commande manuelle unique.

11. Siège selon la revendication 10, **caractérisé en ce qu'**un seul parmi les pignons d'un ensemble pignon-crémaillère est entraîné par un moyen moteur unique ou par une commande manuelle unique.

12. Siège selon l'une quelconque des revendications précédentes, **caractérisé en ce que** la structure porteuse (6) a une forme générale en L qui s'étend selon ledit plan de symétrie (P), et est constituée d'au moins une plaque disposée sensiblement perpendiculairement audit plan de symétrie (P).

13. Siège selon l'une quelconque des revendications précédentes, **caractérisé en ce qu'**une partie de chaque traverse (8a, 8b, 8c, 8d) ou chaque traverse (8a, 8b, 8c, 8d) toute entière est formée avec la structure porteuse (6).

14. Siège selon l'une quelconque des revendications précédentes, **caractérisé en ce que** les structures du dossier (3), respectivement de l'assise (2), sont recouvertes d'un matériau mou tel que de la mousse (17), ledit matériau étant recouvert d'un tissu élastique (18), de sorte que le dossier (3), respectivement l'assise (2), présente une continuité de matériaux et de surface extérieure.

## Claims

1. A single seat (1), adjustable in width, for a vehicle, said seat having a substantially vertical plane of symmetry (P), a back (3) and a seating part (2) extending substantially perpendicularly to the plane of symmetry (P) and a load-bearing structure (6), the back (3) and the seating part (2) being respectively supported by the load-bearing structure (6), each through at least one rail (8a, 8b, 8c, 8d) integral with the load-bearing structure (6) and having an axis perpendicular to the plane of symmetry (P), the back (3) and the seating part (2) being respectively constituted of two parts (2a, 2b, 3a, 3b) which are symmetrical with respect to the vertical plane (P) and positioned symmetrically on either side of the vertical plane (P), with each one of the symmetrical parts (2a, 2b, 3a, 3b) of the back (3) and the seating part (2) being constituted by a structure having a guiding device making it possible to guide each one of the symmetrical parts with respect to said rails (8a, 8b, 8c, 8d) along said axis perpendicular to the plane of symmetry (P), said seat being
**characterized in that** it has at least one control mechanism positioned inside the load-bearing structure (6) and/or said rails (8a, 8b, 8c, 8d), so as to control said symmetrical parts (2a, 2b, 3a, 3b) of the back (3), respectively of the seating part (2), in a symmetrical way with respect to the plane of symmetry (P).

2. A seat according to claim 1, **characterised in that** all the symmetrical parts (3a, 3b) of the back (3) on the one hand, and all the symmetrical parts (2a, 2b) of the seating part (2) on the other hand, are controlled in a synchronized way, with respect to each other.

3. A seat according to any one of claims 1 or 2,
**characterised in that** the symmetrical parts (2a, 2b, 3a, 3b) of the back (3) and of the seating part (2) are, each, supported by two substantially parallel rails (8a, 8b, 8c, 8d) spaced from each other.

4. A seat according to any one of claims 1 to 3,
**characterised in that** the device guiding the symmetrical parts (2a, 2b, 3a, 3b) of the back (3), respectively of the seating part (2), consists of rectilinear elements integral with said structures, said elements being mounted to slide on the rails in a telescopic way.

5. A seat according to claim 4, **characterised in that** the elements constituting the guiding device consists of tubes (9) sliding inside or outside the rails (8a, 8b, 8c, 8d).

6. A seat according to any one of the preceding claims,
**characterised in that** each control mechanism is constituted of a rack and pinion assembly.

7. A seat according to claim 6, **characterised in that** each rack and pinion assembly includes at least one pinion (11) mounted to rotate with respect to the load-bearing structure (6) or to the rail, and at least one rack (12) being integral with symmetrical parts of the back and the seating part.

8. A seat according to claim 7, **characterised in that** each one of the rack and pinion assemblies is composed of two pinions (11) positioned symmetrically with respect to the plane of symmetry (P), and a first and a second rack (12), each engaging the two pinions (11), with the first, respectively, the second rack being integral with respectively symmetrical parts (2a, 2b, 3a, 3b) of the back (3) and the seating part (2).

9. A seat according to claim 8, **characterised in that** the racks (12) of a rack and pinion assembly are formed on rectangular frames (13a, 13b) cut for accommodating both pinions (11) inside the recesses, with the frames (13a, 13b) being mounted to be stacked and to slide one on the other.

10. A seat according to any one of claims 6 to 9,
**characterised in that** the whole rack and pinion assembly is driven by single motor means or by a single manual control.

11. A seat according to claim 10, **characterised in that** only one among the pinions of a rack and pinion assembly is driven by single motor means or by a single manual control.

12. A seat according to any one of the preceding claims,
**characterised in that** the load-bearing structure (6) has the general shape of a L which extends according to said plane of symmetry (P) and is constituted of at least one plate positioned substantially perpendicularly to said plane of symmetry (P).

13. A seat according to any one of the preceding claims,
**characterised in that** a part of each rail (8a, 8b, 8c, 8d) or each rail (8a, 8b, 8c, 8d) as a whole is formed with the load-bearing structure (6).

14. A seat according to any one of the preceding claims,
**characterised in that** the structures of the back (3), respectively the seating part (2), are covered with a soft material, such as foam (17), said material being covered with an elastic fabric (18), so that the back (3), respectively the seating part (2), shows continuity in the materials and the external surface thereof.

## Patentansprüche

1. Breitenverstellbarer Einzelsitz (1) für ein Fahrzeug,
wobei der besagte Sitz eine deutliche vertikale Symmetrieebene (P) hat, eine Rückenlehne (3) und eine Sitzfläche (2), die sich im wesentlichen senkrecht zur Symmetrieebene (P) erstreckt, und eine Tragstruktur (6),
wobei die Rückenlehne (3) beziehungsweise die Sitzfläche (2) auf der Tragstruktur (6) getragen werden, jeweils durch mindestens eine Traverse (8a, 8b, 8c, 8d), die fest mit der Tragstruktur (6) verbunden ist und eine zur Symmetrieebene (P) senkrechte Achse hat, und wobei die Rückenlehne (3) und die Sitzfläche (2) jeweils aus zwei Teilen gebildet werden (2a, 2b, 2c, 2d), die symmetrisch gegenüber der vertikalen Ebene (P) stehen und symmetrisch zu beiden Seiten der vertikalen Ebene (P) angeordnet sind, wobei jeder der symmetrischen Teile (2a, 2b, 3a, 3b) der Rückenlehne (3) und der Sitzfläche (2) durch eine Struktur gebildet wird, die eine Führungsvorrichtung besitzt, mit der jeder der symmetrischen Teile gegenüber den besagten Traversen (8a, 8b, 8c, 8d) nach der besagten Achse senkrecht zur Symmetrieebene (P) geführt werden kann, wobei der besagte Sitz **dadurch gekennzeichnet ist, daß** er mindestens einen Steuermechanismus besitzt, der im Innern der Tragstruktur (6) und/oder der besagten Traversen (8a, 8b, 8c, 8d) angeordnet ist, so daß die besagten symmetrischen Teile (2a, 2b, 3a, 3b) der Rückenlehne (3) beziehungsweise der Sitzfläche (2) symmetrisch zur Symmetrieebene (P) gesteuert werden.

2. Sitz nach Anspruch 1, **dadurch gekennzeichnet, daß** alle symmetrischen Teile (3a, 3b) der Rückenlehne (3) einerseits und alle symmetrischen Teile (2a, 2b) der Sitzfläche (2) andererseits synchron zusammen gesteuert werden.

3. Sitz nach einem beliebigen der vorstehenden Ansprüche 1 oder 2, **dadurch gekennzeichnet, daß** die symmetrischen Teile (2a, 2b, 3a, 3b) der Rückenlehne (3) und der Sitzfläche (2) jeweils von zwei Traversen (8a, 8b, 8c, 8d) getragen werden, die deutlich parallel und im Abstand voneinander verlaufen.

4. Sitz nach einem beliebigen der vorstehenden Ansprüche 1 bis 3, **dadurch gekennzeichnet, daß** die Führungsvorrichtung der symmetrischen Teile (2a, 2b, 3a, 3b) der Rückenlehne (3) beziehungsweise der Sitzfläche (2) aus geradlinigen mit den besagten Strukturen fest verbundenen Elementen besteht,
wobei die besagten Elemente teleskopisch gleitend auf den Traversen montiert sind.

5. Sitz nach Anspruch 4, **dadurch gekennzeichnet, daß** die die Führungsvorrichtung bildenden Elemente Rohre (9) sind, die im Innern oder außerhalb der Traversen (8a, 8b, 8c, 8d) gleiten.

6. Sitz nach einem beliebigen der vorstehenden Ansprüche
**dadurch gekennzeichnet, daß** jeder Steuermechanismus aus einem Ensemble Ritzel mit Zahnstange besteht.

7. Sitz nach Anspruch 6, **dadurch gekennzeichnet, daß** jedes Ensemble Ritzel mit Zahnstange mindestens ein Ritzel (11) umfaßt, das drehend gegenüber der Tragstruktur (6) oder der Traverse montiert ist, und mindestens eine Zahnstange (12), die fest mit den symmetrischen Teilen der Rückenlehne und der Sitzfläche verbunden ist.

8. Sitz nach Anspruch 7, **dadurch gekennzeichnet, daß** jedes Ensemble Ritzel mit Zahnstange aus zwei Ritzeln (11) besteht, die symmetrisch gegenüber der Symmetrieebene (P) angeordnet sind, und aus einer ersten und einer zweiten Zahnstange (12), die jeweils in die beiden Ritzel (11) eingreifen, wobei die erste beziehungsweise die zweite Zahnstange fest mit den jeweiligen symmetrischen Teilen (2a, 2b, 3a, 3b) der Rückenlehne (3) und der Sitzfläche (2) verbunden sind.

9. Sitz nach Anspruch 8, **dadurch gekennzeichnet, daß** die Zahnstangen (12) eines Ensembles Ritzel mit Zahnstange auf rechteckigen Rahmen (13a, 13b) gebildet sind, die ausgespart sind, um die beiden Ritzel (11) im Innern der Aussparungen aufzunehmen, wobei die Rahmen (13a, 13b) übereinander und aufeinander gleitend montiert sind.

10. Sitz nach einem beliebigen der vorstehenden Ansprüche 6 bis 9, **dadurch gekennzeichnet, daß** alle Ensembles Ritzel mit Zahnstange vermittels eines einzigen Motors oder durch eine einzige manuelle Steuerung angetrieben werden.

11. Sitz nach Anspruch 10, **dadurch gekennzeichnet, daß** ein einziges der Ritzel eines Ensembles Ritzel mit Zahnstange vermittels eines einzigen Motors oder durch eine einzige manuelle Steuerung angetrieben werden.

12. Sitz nach einem beliebigen der vorstehenden Ansprüche,
**dadurch gekennzeichnet, daß** die Tragstruktur (6) eine allgemeine L-Form hat, die sich nach der besagten Symmetrie (P) erstreckt und von mindestens einer Platte gebildet wird, die deutlich senkrecht zur besagten Symmetrieebene (P) angeordnet ist.

13. Sitz nach einem beliebigen der vorstehenden Ansprüche,
**dadurch gekennzeichnet, daß** ein Teil jeder Traverse (8a, 8b, 8c, 8d) oder jede Traverse (8a, 8b, 8c, 8d) vollständig mit der Tragstruktur (6) gebildet wird.

14. Sitz nach einem beliebigen der vorstehenden Ansprüche,
**dadurch gekennzeichnet, daß** die Strukturen der Rückenlehne (3) beziehungsweise der Sitzfläche (2) mit einem weichen Material überzogen sind, wie zum Beispiel Schaumstoff (17),
wobei das besagte Material von einem elastischen Gewebe (18) überzogen ist, so daß die Rückenlehne (3) beziehungsweise die Sitzfläche (2) eine Kontinuität von Material und Außenfläche aufweisen.
